# EUROPÄISCHE PATENTSCHRIFT

(11) **EP 0 899 756 B1**
(45) Veröffentlichungstag und Bekanntmachung des Hinweises auf die Patenterteilung: **04.01.2006**
(21) Anmeldenummer: 98202850.8
(22) Anmeldetag: 25.08.1998
(51) Int. Cl.: H01G 4/12

(54) **Vielschichtkondensator mit silber- oder seltenerdmetalldotiertem Barium-Calcium-Zirkon-Titanat**
Multilayer capacitor with silver- or rare earth metal doped barium-calcium-zircon-titanate
Condensateur multicouches contenant du barium-calcium-zirconium-titanate dopé avec de l'argent ou une terre rare

(30) Priorität: 28.08.1997 DE 19737324
(43) Veröffentlichungstag der Anmeldung: 03.03.1999
(73) Patentinhaber: Ferro (Holland) B.V., 3029 AB Rotterdam (NL)
(72) Erfinder: Hansen, Peter, Dr., Röntgenstrasse 24, 22335 Hamburg (DE)
(74) Vertreter: Van kan, Johan Joseph Hubert

(56) Entgegenhaltungen:
- EP-A- 0 827 166
- CHEMICAL ABSTRACTS, vol. 109, no. 12, 19. September 1988 (1988-09-19) Columbus, Ohio, US; abstract no. 103204, FUJIKAWA, NOBUYOSHI ET AL: "Barium titanate-based non-reducible dielectric ceramic composition for laminated capacitors" XP002122246 & JP 62 278163 A (KYOCERA CORP., JAPAN) 3. Dezember 1987 (1987-12-03)
- PATENT ABSTRACTS OF JAPAN vol. 015, no. 302 (C-0855), 2. August 1991 (1991-08-02) & JP 03 112860 A (MATSUSHITA ELECTRIC IND CO LTD), 14. Mai 1991 (1991-05-14)
- PATENT ABSTRACTS OF JAPAN vol. 017, no. 046 (C-1021), 28. Januar 1993 (1993-01-28) & JP 04 260665 A (TDK CORP), 16. September 1992 (1992-09-16)
- PATENT ABSTRACTS OF JAPAN vol. 015, no. 078 (E-1037), 22. Februar 1991 (1991-02-22) & JP 02 296313 A (MATSUSHITA ELECTRIC IND CO LTD), 6. Dezember 1990 (1990-12-06)
- P. HANSEN ET AL.: "Dielectric Properties of Acceptor-Doped (Ba,Ca)(Ti,Zr)O3 Ceramics" JOURNAL OF ELECTROCERAMICS, Bd. 2, Nr. 2, 1998, Seiten 85-94, XP000853737 boston

## Beschreibung

Gegenstand der Erfindung ist ein Kondensator mit einem Dielektrikum aus einer dielektrischen keramischen Zubereitung, die ein dotiertes Barium-Calcium-Zirkon-Titanat umfaßt, und mindestens zwei Elektroden. Insbesondere betrifft die Erfindung einen Vielschichtkondensator mit inneren Elektroden aus Unedelmetallen.

Keramische Vielschichtkondensatoren werden üblicherweise hergestellt, indem Schichten für das Dielektrikum aus einer grünen dielektrischen keramischen Zubereitung abwechselnd mit Schichten aus einer Metallpaste für die inneren Elektroden übereinander gestapelt werden und anschließend dieser Stapel aus Keramik- und Metallschichten gesintert wird.

Die Qualität von keramischen Vielschichtkondensatoren wird sowohl durch die chemische Zusammensetzung des Materials für Dielektrikum und Elektroden als auch durch die Herstellungsbedingungen bestimmt. Bei den Herstellungsbedingungen spielen vor allem die Sinterungsbedingungen eine Rolle. Abhängig von der Sinteratmosphäre können bei der Sinterung verschiedene, gegenläufige Oxidations- und Reduktionsreaktionen ablaufen. Beim Sintern in reduzierender Atmosphäre werden Bariumtitanat und seine Derivate, z. B. die dotierten Barium-Calcium-Zirkon-Titanate, halbleitend. Sie sind in diesem Zustand als Dielektrikum ungeeignet. Die Sinterung der Vielschichtkondensatoren unter oxidierenden Bedingungen kann nur dann erfolgen, wenn das Elektrodenmaterial aus Rhodium, Palladium oder Platin besteht. Rhodium und Platin sind jedoch sehr teuer, ihr Anteil an den Herstellungskosten kann bis zu 50% betragen. Die Entwicklung geht daher dahin, statt Rhodium und Platin das sehr viel billigere Nickel oder dessen Legierungen zu verwenden. Nickel oxidiert jedoch bei einer Sinterung unter oxidierenden Bedingungen, deshalb müssen Vielschichtkondensatoren mit Nickelelektroden in inerter oder leicht reduzierender Atmosphäre gesintert werden. An sich würde bei einer reduzierenden Sinterung das vierwertige Titan im Bariumtitanat zu dreiwertigem reduziert, wodurch der Isolationswiderstand der Kondensatoren extrem erniedrigt wird. Inzwischen ist es aber gelungen, die Reduzierbarkeit des Titans im Bariumtitanat durch Dotierung mit Additiven, die Akzeptoren sind, wie Cr₂O₃, Co₂O₃ oder MnO, abzuschwächen.

Durch diese Dotierungen läßt es sich aber nicht verhindern, daß während des Sinterprozesses in reduzierender Atmosphäre Sauerstoffleerstellen im Kristall entstehen, die die Lebensdauer der Kondensatoren drastisch verkürzen. Die Sauerstoffleerstellen haben eine hohe Beweglichkeit im Kristallgitter und wandern unter dem Einfluß von elektrischer Spannung und Temperatur. Dadurch verringert sich mit der Zeit der Isolationswiderstand.

Die Bildung von Sauerstoffleerstellen kann teilweise rückgängig gemacht werden, wenn die Kondensatoren nach dem Sintern in reduzierender Atmosphäre noch einmal in schwachoxidierender Atmosphäre bei Temperaturen zwischen 600 °C und 1100 °C getempert werden. Dabei füllen sich die Sauerstoffleerstellen im Gitter wieder auf. Nachteil der Temperung ist die deutliche Abnahme der Dielektrizitätskonstanten ε und der negative Einfluß auf die Δ C/ Δt - Kurve, d.h. auf die Temperaturabhängigkeit der Dielektrizität.

Um diese komplexen Schwierigkeiten bei der Herstellung von keramischen Kondensatoren mit Unedelmetallelektroden zu überwinden, wird von der US 5,319,517 ein keramischer Vielschichtchipkondensator mit inneren Elektroden und dielektrischen Schichten vorgeschlagen, dessen dielektrisches Material ein dielektrisches Oxid enthält, das die folgende Zusammensetzung hat: [(Ba_{1-x-y}CaₓSr_{y})O]ₘ(Ti₁₋ₓZrₓ)O₂, wobei 0 ≤ x ≤ 0,25, 0 ≤ y ≤ 0,05, 0,1 ≤ z ≤ 0,3 und 1,000 ≤ m ≤ 1,020 ist und dem ein Manganoxid und/oder eine Verbindung, die beim Brennen in das Oxid umgewandelt wird, in einer Menge von 0,01 bis 0,5 Gew.-%, berechnet als Oxid (MnO), ein Yttriumoxid und/oder eine Verbindung, die beim Brennen in das Oxid umgewandelt wird, in einer Menge von 0,05 bis 0,5 Gew.-%, berechnet als Oxid (Y₂O₃), ein Vanadinoxid und/oder eine Verbindung, die beim Brennen in das Oxid umgewandelt wird, in einer Menge von 0,005 bis 0,3 Gew.-%, berechnet als Oxid (V₂O₅), ein Wolframoxid und/oder eine Verbindung, die beim Brennen in das Oxid umgewandelt wird, in einer Menge von 0,005 bis 0,3 Gew.-%, berechnet als Oxid (MnO), zugefügt ist und dessen Material für die inneren Elektroden Nickel oder eine Nickellegierung ist. Die ständig steigenden Anforderungen an Lebensdauer und Zuverlässigkeit können diese Vielschichtkondensatoren jedoch noch nicht erfüllen.

Es ist daher die Aufgabe der vorliegenden Erfindung, einen keramischen Kondensator zu schaffen, mit einem Dielektrikum aus einer dielektrischen keramischen Zubereitung, die ein dotiertes Barium-Calcium-Zirkon-Titanat umfaßt, und mindestens zwei Elektroden, der sich durch eine verlängerte Lebensdauer, größere Zuverlässigkeit, eine hohe Dielektrizitätskonstante und eine niedrige Temperaturabhängigkeit der Dielektrizitätskonstanten über einen weiten Temperaturbereich auszeichnet.

Erfindungsgemäß wird die Aufgabe gelöst durch einen Kondensator gemäß Anspruch 1 mit einem keramischen Dielektrikum auf der Basis von einem dotierten Barium-Calcium-Zirkon-Titanat der Zusammensetzung (Ba_{1-α-µv}A_{µ}DᵥCa_{α})[Ti_{1-x-δ-µ'-v'}Mn_{δ}A'_{µ'}D'_{v'}Zrₓ]_{z}O₃, wobei A = Ag, A' = Ga, Dy, Er, Ho, Y, Yb; D = Nd, Pr, Sm, Gd; D' = Nb, Mo; 0 < α ≤ 0.05, 0.10 ≤ x ≤ 0.25; 0 ≤ µ ≤ 0.01;0 ≤ µ' ≤ 0.01; 0 ≤ v ≤ 0.01; 0 ≤ v' ≤ 0.01; 0 < δ ≤ 0.01 und 0.995 ≤ z < 1 ist, und mindestens zwei Elektroden.

Er zeichnet sich durch eine hohe Dielektrizitätskonstante K bei gleichzeitig hoher Stabilität des Kapazitätswertes und hoher Lebensdauer niedrigem Verlustfaktor, hohem Isolationswiderstand und einer wenig spannungsabhängigen Kapazität aus. Die Temperaturabhängigkeit seiner Dielektrizitätszahl K entspricht der EIA- Norm Y5V. Der Einsatzbereich umfaßt insbesondere Kopplung und Entkopplung sowie die Funkentstörung bei Kteinspannungsanwendungen. Durch dieses Zusammensetzung mit einem ausgewogenen Verhältnis von Donatoren D, D' und Akzeptoren A, A' wird eine geringe Ionenbeweglichkeit und damit eine besonders hohe Lebensdauer bei hohen Temperaturen und elektrischen Feldern erreicht. Gleichzeitig ist die Akzeptorkonzentration hoch genug, um die Redoxreaktionen bei der Sinterung des Vielschichtkondensators mit Unedelmetallelektroden kontrollierbar zu machen und um ein kontrolliertes Kornwachstum zu erreichen.

Im Rahmen der vorliegenden Erfindung ist es bevorzugt, daß das dotierte Barium-Calcium-Zirkon-Titanat die Zusammensetzung (Ba_{0.96-v}DᵥCa_{0.04})[Ti_{1-x-δ-µ'}Mn_{δ}A'_{µ'}Zrₓ]_{z}O₃ mit A' = Dy, Er, Ho, Y, Yb; D = Nd, Pr, Sm, Gd; 0.10 ≤ x ≤ 0.25; 0 ≤ µ' ≤ 0.01, 0 ≤ v ≤ 0.01, 0 < δ ≤ 0.01 und 0.995 ≤z < 1 hat. Mit dieser Zusammensetzung des Barium-Calcium-Zirkon-Titanates wird ein optimales Kornwachstum und ein hohe maximale dielektrische Konstante erreicht.

Es kann auch bevorzugt sein, daß das dotierte Barium-Calcium-Zirkon-Titanat die Zusammensetzung (Ba_{0.96-µ-v}A_{µ}DᵥCa_{0.04})[Ti_{1-x-δ}Mn_{δ}Zrₓ]_{z}O₃ mit A = Ag, D = Nd, Pr, Sm, Gd; 0.10 ≤ x ≤ 0.25; 0 ≤ µ ≤ 0.01, 0 ≤ v ≤ 0.01, 0 < δ ≤ 0.01 und 0.995 ≤ z < 1 hat.

Es kann ebenfalls bevorzugt sein, daß das dotierte Barium-Calcium-Zirkon-Titanat die Zusammensetzung (Ba_{0.96-µ}A_{µ}Ca_{0.04})[Ti_{1-x-δ-v'}Mn_{δ}D'_{v'}Zrₓ]_{z}O₃ mit A = Ag, D' = Nb, Mo, 0.10 ≤ x ≤ 0.25; 0 ≤ µ ≤ 0.01, 0 ≤ v' ≤ 0.01, 0 < δ ≤ 0.01 und 0.995 ≤ z < 1 hat.

Im Rahmen der vorliegenden Erfindung ist es besonders bevorzugt, daß das dotierte Barium-Calcium-Zirkon-Titanat die Zusammensetzung (Ba_{0.9575}Nd_{0.0025}Ca_{0.04})[Ti_{0.995-x}Mn_{0.0025}Y_{0.0025}Zrₓ]_{z}O₃ mit 0.18 ≤ x ≤ 0.22 und 0.995 ≤ z ≤0.999 hat.

Im Rahmen der vorliegenden Erfindung ist es bevorzugt, daß das Material für die Elektroden Nickel oder eine Nickellegierung ist.

Es ist besonders bevorzugt, daß der Kondensator ein Vielschichtkondensator mit inneren Elektroden aus Nickel oder einer Nickellegierung ist. Es kann auch bevorzugt sein, daß die dielektrische keramische Zubereitung 0,1 - 1 Gew.-% Sinterhilfsmittel enthält.

Die Erfindung betrifft weiterhin eine Keramik auf der Basis von dotiertem Barium-Calcium-Zirkon-Titanat gemäß Anspruch 9, mit der Zusammensetzung (Ba_{1-α-µ-v}A_{µ}DᵥCa_{α})[Ti_{1-x-δ'-v'}Mg_{δ}A'_{µ'}D'_{v'}Zrₓ]_{z}O₃, wobei A = Ag, A' = Dy, Er, Ho, Y, Yb, Ga; D = Nd, Pr, Sm, Gd; D' = Nb, Mo, 0.10 ≤ x ≤ 0.25 0 ≤ µ ≤ 0.01, 0 ≤ µ' ≤ 0.01, 0 ≤ v ≤ 0.01, 0 ≤ v' ≤ 0.01, 0 < δ ≤ 0.01, 0.995 ≤ z < 1 und 0 < α ≤ 0.05 ist.

Nachfolgend wird die Erfindung anhand einer Figur und von Beispielen weiter erläutert.

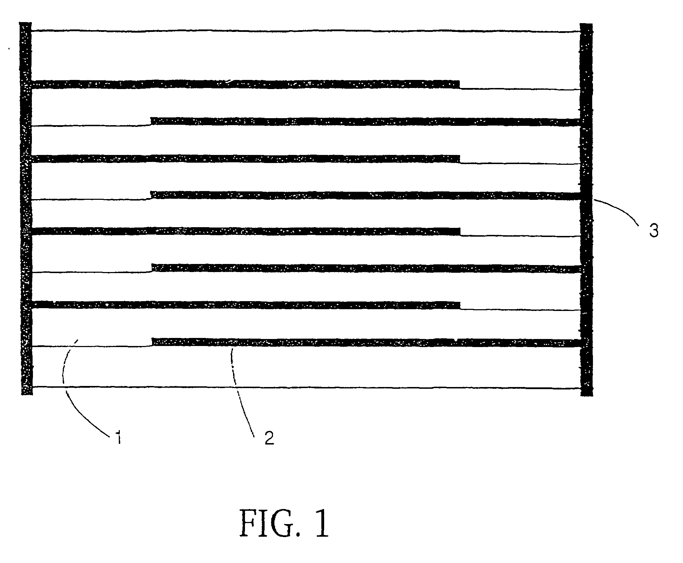

**Fig. 1** zeigt die Querschnittsansicht einer Ausführungsform des erfindungsgemäßen Kondensators. In dieser bevorzugten Ausführungsform ist der erfindungsgemäße Kondensator ein Vielschichtkondensator.

Der erfindungsgemäße keramische Vielschichtkondensator umfaßt ein keramisches Dielektrikum **1**, das aus einer Vielzahl von oxidischen dielektrischen Schichten mit einer Dicke von 2 bis 20 µm besteht, sowie einer Vielzahl von inneren Elektroden **2**, die schichtförmig in dem Dielektrikum übereinander angeordnet sind und sich abwechselnd zu zwei gegenüberliegenden Endflächen des Dielektrikums erstrecken. Auf den Endflächen des keramischen Dielektrikums sind metallische Kontaktelektroden **3** als äußere Anschlüsse vorgesehen, die mit den entsprechenden inneren metallischen Elektroden verbunden sind.

Die Herstellung erfolgt nach den üblichen Fertigungstechniken für keramische Kondensatoren, wobei je nach der gewünschten Form und den Abmessungen, der angestrebten Genauigkeit und der späteren Verwendung zahlreiche Herstellungsvarianten möglich sind.

Material für das keramische Dielektrikum ist eine dielektrische keramische Zubereitung mit einem dotierten Barium-Calcium-Zirkon-Titanat mit der Zusammensetzung (Ba_{1-α-µ-v}A_{µ}DᵥCa_{α})[Ti_{1-k-δ-µ'-v'}Mn_{δ}A'_{µ}D'_{v'}Zrₓ]₂O₃ umfaßt, wobei A = Ag, A' = Ga, Dy, Er, Ho, Y, Yb; D = Nd, Pr, Sm, Gd; D' = Nb, Mo; 0 ≤ α ≤ 0.05, 0.10 ≤ x ≤ 0.25; 0 ≤ µ ≤ 0.01; 0 ≤ µ' ≤ 0.01; 0 ≤ v ≤ 0.01; 0 ≤ v' ≤ 0.01; 0 < δ ≤ 0.01 und 0.995 ≤ z < 1 ist. Dieses Barium-Calcium-Zirkon-Titanat hat eine Perowskit-Struktur der allgemeinen Zusammensetzung ABO₃, bei der die Seltenerdmetalle Nd, Pr, Sm und Gd mit großen Ionenradius auf A-Plätzen und die Seltenerdmetalle Dy, Er, Ho, Y, und Yb mit kleinem Ionenradius auf B-Plätzen angeordnet sind. Er enthält die Akzeptorionen Ag, Dy, Er, Ho, Y oder Yb und die Donatorionen Nb, Mo, Nd, Pr, Sm und Gd auf Gitterplätzen mit verschiedener lokaler Symmetrie. Donatoren und Akzeptoren bilden Donator-Akzeptor- Titanates. Durch die Additive wird der Curiepunkt T_{C} erniedrigt. Der Curiepunkt wird weiterhin durch den Zirkongehalt des Barium-Calcium-Zirkon-Titanates bestimmt.

Vorzugsweise enthält die dielektrische keramische Zubereitung SiO₂ als Sinterhilfsmittel in einer Menge von 0,125 Gew.-% bis 0,25 Gew.-% SiO₂. Alternativ zu dieser Standardsinterhilfe kann der Mischung auch 0,1 - 1 Gew.-% Sinterhilfsmittel, bestehend aus einer Mischung aus 0,16 bis 0,9 Mol Lithiumoxid, 0, 004 bis 0,39 Mol eines oder mehrerer der Oxide CaO, MgO, BaO und SrO sowie 0.2 bis 0.8 Mol Siliziumoxid, zugefügt werden.

Durch dieses Sinterhilfsmittel kann die Sintertemperatur unter 1200 °C gesenkt werden.

Die Materialauswahl für die Elektroden unterliegt keinen besonderen Beschränkungen, so daß man hierfür ein Metall oder eine Kombination von zwei oder mehreren üblicherweise angewandten Metallen verwenden kann. Die Elektroden können aus Edelmetallen, wie Platin, Palladium, Gold oder Silber bestehen. Sie können auch Chrom, Zirkonium, Vanadium, Zink, Kupfer, Zinn, Blei, Mangan, Molybdän, Wolfram, Titan oder Aluminium enthalten. Bevorzugt bestehen sie aus einem Nichtedelmetall, ausgewählt aus der Gruppe Nickel, Eisen, Cobalt und deren Legierungen.

Die Herstellung der dielektrischen keramischen Zubereitung kann nach den üblichen Methoden zur Pulverherstellung, z. B. durch das Mischoxid-Verfahren, Copräzipitation, Sprühtrocknung, Sol/Gel-Verfahren, Hdrothermalverfahren oder Alkoxid-Verfahren erfolgen. Bevorzugt ist das Mischoxid-Verfahren, bei dem die Ausgangsoxide oder thermisch zersetzbare Verbindungen, wie z. B. Carbonate, Hydroxide, Oxalate oder Acetate, gemischt und gemahlen werden. Anschließend wird das Ausgangspulver bei 1000 °C bis 1400 °C kalziniert.

Für die Formgebung zum Grünkörper können ebenfalls alle üblichen Methoden verwendet werden. Für keramische Kondensatoren in Vielschichttechnologie wird zur Formgebung aus dem kalzinierten Pulver zunächst eine Suspension hergestellt, die neben dem Pulver als weitere Komponente Lösungsmittel, Bindemittel und gegebenenfalls Weichmacher und Dispergierhilfsmittel enthält. Das Lösungsmittel kann beispielsweise Wasser, ein Alkohol, Toluol, Xylol oder Trichloräthylen sein. Als Bindemittel werden üblicherweise organische Polymere wie Polyvinylalkohol, Polyvinylbutyral oder Polymethymetacrylat verwendet. Als Weichmacher kann man Glyzerin, Polyglykole oder Phtalate verwenden. Weiterhin kann man der Suspension Dispergiermittel wie Alkylarylpolyätheralkohole, Polyäthylenglykoläthyläther oder Octylphenoxyäthanol zusetzen.

Aus der Suspension werden nach dem bevorzugten Verfahren durch ein Foliengießverfahren grünen keramischen Folien hergestellt. Bei dem Foliengießverfahren wird die Suspension auf eine sich bewegende Trägeroberfläche gegossen. Nach dem Verdampfen des Lösungsmittels bleibt je nach Bindersystem eine mehr oder weniger flexible Folie zurück, die geschnitten, mit einer Metallpaste im Muster der inneren Elektroden im Siebdruckverfahren bedruckt und laminiert wird. Aus dem Laminat werden die einzelnen Vielschichtkondensatoren ausgeschnitten. Diese werden zunächst in schwach reduzierender Atmosphäre bei Temperaturen zwischen 1100 und 1400 °C gesintert und anschließend in schwach oxidierender Atmosphäre bei Temperaturen zwischen 600 und 1100 °C getempert. Als schwach reduzierende Atmosphäre kann man mit Wasserdampf gesättigten Stickstoff mit einer Beimengung von 0,5 bis 2 Vol.-% Wasserstoff, als schwach oxidierende Atmosphäre Stickstoff mit 5 ppm bis 100 ppm Sauerstoff verwenden.

Zur Bildung der äußeren Elektroden werden an den Endflächen der Kondensatoren eine IVfetallpaste, die beispielsweise Nickel enthält, aufgetragen und eingebrannt. Die äußeren Elektroden können aber auch durch Aufdampfen einer Metallschicht, beispielsweise aus Gold, aufgebracht werden.

Das gesinterte keramische Dielektrikum hat eine homogene Mikrostruktur mit Korngrößen unter 5 µm.

Zur Charakterisierung der erfindungsgemäßen Kondensatoren wurden in bekannter Weise die Dielektrizitätskonstante ε bei 25 °C, der Verlustfaktor tg δ gemessen. Die Lebensdauer τ wird in einem stark beschleunigten Lebensdauertest (HALT) bei 350 °C und 900 V gemessen. Dazu werden mit Elektroden kontaktierte Test-Pillen mit 5 mm Durchmesser und einer Schichtdicke von 0,05 mm hergestellt, auf 350 °C aufgeheizt und es wird Spannung von 1800 V/mm angelegt. Man mißt den Strom, aus dem der Isolationswiderstand berechnet wird. Nach Start des Tests ist der Isolations-widerstand zunächst hoch. Im weiteren bleibt der Isolationswiderstand im wesentlichen konstant auf hohem Niveau. Erst nach einer gewissen charakteristischen Degradationszeit beginnt der Isolationswiderstand abzufallen. Der Leckstrom wächst in einer zur bisherigen Meßzeit kurzen Zeit um mehrere Größenordnungen an. Die Lebensdauer τ ist definiert als die Zeit, in dem der Leckstrom um eine Größenordnung angewachsen ist.

### Ausführungsbeispiel 1

Für die Herstellung eines Vielschichtkondensators mit einem keramischen Dielektrikum mit der Zusammensetzung (Ba_{0.9575}Nd_{0.0025}Ca_{0.04})[Ti_{0.815}Y_{0.0025}Zr_{0.18}Mn_{0.0025}]_{0.997}O₃ und 0,125 Gew.-% SiO₂ als Sinterhilfe werden 188,96 g BaCO₃ (d₅₀ = 1,1 µm, BET: 2,1 m²/g), 0.841g Nd₂O₃, 4,004 g CaCO₃ (d₅₀ = 0,8 µm), 64,727 g TiO₂ (d₅₀ = 0,48 µm, BET: 7 m²/g), 22,056 g ZrO₂ (d₅₀ =0,12 µm, BET: 21,9m²/g), 0,286 g MnCO₃, 0.985 g Y₂O₃ und 0,36g SiO₂ (kolloidal, 22 nm) in einer Planetkugelmühle zwei Stunden gemahlen und gemischt. Als Mahlflüssigkeit wird Cyclohexan, als Mahlkugeln Achat benutzt. Anschließend wird die Mischung 24 h mit 2mm-YTZ- Kugeln in Isopropanol gemahlen. Nach dem Mahlen in der Planetkugelmühle wird das Gemisch unter einem Oberflächenverdampfer an Luft getrocknet und danach 6 h bei 1250 °C kalziniert. Man mischt das pulverförmige Material mit Polyvinylalkohol als Bindemittel, einem oberflächenaktiven Mittel, einem Dispergiermittel und Wasser zu einem Schlicker. Den Schlicker verarbeitet man in einer Rakelbeschichtungseinrichtung zu grünen keramischen Folien mit einer Dicke von 20 µm.

Die grüne Folie wird zu Folienkarten geschnitten, mit einer Nickelpaste mit dem Muster der inneren Elektroden bedruckt, gestapelt und zusammengepreßt und in die einzelnen Kondensatoren getrennt. Die Kondensatoren werden bei einer Temperatur von 1320 °C gesintert. Die Aufheizrate beträgt 300 °C/h bis zu einer Haltezeit bei 1000 °C und weiter 300 °C/h bis 1320 °C. Während des Sinterprozesses wird durch den Ofen ein Gasgemisch bestehend aus 99 % N₂ und 1 % H₂ geleitet, das mit Wasserdampf gesättigt ist. Es wird mit 300 °C/h abgekühlt. Nach dem Sintern werden die Kondensatoren in einem Temperofen bei einer Temperatur von 1000 °C getempert. Während des Temperprozesses wird durch den Ofen ein Gasgemisch bestehend aus Stickstoff mit 50 - 100 ppm Sauerstoff geleitet.

Als äußere Elektroden wird eine 6 nm dicke CrNi-Schicht aufgedampft, die mit 0,15 µm Au beschichtet wird.

**Testergebnisse:**

| Material | T_{c}(C) | Kₘₐₓ | Lebensdauer (HALT) 350 °C/900V |
|---|---|---|---|
| (Ba_{0.9575}Ag_{0.0025}Ca_{0.04}) [Ti_{0.815}Mn_{0.0025}Nb_{0.0025}Zr_{0.18}]_{0.997}O₃ | 16.9 | 25100 | > 100 h |
| (Ba_{0.9550}Ag_{0.0025}Nd_{0.0025}Ca_{0.04}) [Ti_{0.8175}Mn_{0.0025}Zr_{0.18}]_{0.997}O₃ | 20.2 | 22600 | > 450 h |
| (Ba_{0.9575}Gd_{0.0025}Ca_{0.04}) [Ti_{0.815}Mn_{0.0025}Y_{0.0025}Zr_{0.18}]_{0.997}O₃ | 21.9 | 24100 | > 170 h |
| (Ba_{0.9575}Nd_{0.0025}Ca_{0.04}) [Ti_{0.815}Mn_{0.0025}Er_{0.0025}Zr_{0.18}]_{0.997}O₃ | 23.7 | 25700 | > 170 h |
| (Ba_{0.9575}Nd_{0.0025}Ca_{0.04}) [Ti_{0.815}Mn_{0.0025}Y_{0.0025}Zr_{0.18}]_{0.995}O₃ | 11.9 | 25100 | > 450 h |
| (Ba_{0.9575}Nd_{0.0025}Ca_{0.04}) [Ti_{0.815}Mn_{0.0025}Y_{0.0025}Zr_{0.18}]_{0.997}O₃ | 20.8 | 33500 | > 160 h |
| (Ba_{0.955}Nd_{0.005}Ca_{0.04}) [Ti_{0.8125}Mn_{0.005}Y_{0.0025}Zr_{0.18}]_{0.995}O₃ | 27.7 | 23500 | 100 h |
| (Ba_{0.9575}Pr_{0.0025}Ca_{0.04}) [Ti_{0.815}Mn_{0.0025}Ho_{0.0025}Zr_{0.18}]_{0.997}O₃ | 19.8 | 23400 | > 110 h |
| (Ba_{0.9575}Pr_{0.0025}Ca_{0.04}) [Ti_{0.815}Mn_{0.0025}Yb_{0.0025}Zr_{0.18}]_{0.997}O₃ | 20.2 | 20200 | >160 h |

## Patentansprüche

1. Kondensator mit mindestens zwei Elektroden (2) und mit einem keramischen Dielektrikum (1) auf der Basis von dotiertem Barium-Calcium-Zirkon-Titanat **gekennzeichnet dadurch, daß** die Zusammansetzung des Barium-Calcium-Zirkon-Titanats (Ba_{1-α-µ-v}A_{µ}DᵥCaα)[Ti_{1-x-δ-µ'-v'}Mn_{δ}A'_{µ'}D'_{v'}Zrₓ]₂O₃ ist,
wobei A = Ag,
A' = Dy, Er, Ho, Y, Yb, Ga;
D = Nd, Pr, Sm, Gd;
D' = Nb, Mo,
0.10 ≤x ≤ 0.25
0 ≤ µ ≤ 0.01,
0 ≤ µ' ≤ 0.01,
0 ≤ v ≤ 0.01,
0 ≤ v' ≤ 0.01,
0 < δ ≤ 0.01,
0.995 ≤ z < 1 und
0 < α ≤ 0.05.

2. Kondensator gemäß Anspruch 1,
**dadurch gekennzeichnet,**
**daß** das dotierte Barium-Calcium-Zirkon-Titanat die Zusammensetzung (Ba_{0.96-v}DᵥCa_{0.04})[Ti_{1-x-δ-µ'}Mn_{δ}A'_{µ'}Zrₓ]_{z}O₃ mit
A' = Dy, Er,Ho, Y, Yb;
D = Nd, Pr, Sm, Gd;
0.10 ≤ x ≤ 0.25;
0 ≤ µ' ≤ 0.01,
0 ≤ v ≤ 0.01,
0 < δ ≤ 0.01 und
0.995 ≤ z < 1 hat.

3. Kondensator gemäß Anspruch 1,
**dadurch gekennzeichnet,**
**daß** das dotierte Barium-Calcium-Zirkon-Titanat die Zusammensetzung (Ba_{0.96-µ-v}A_{µ}DᵥCa_{0.04})[Ti_{1-x-δ}Mn_{δ}Zrₓ]_{z}O₃ mit
A = Ag,
D = Nd, Pr, Sm, Gd;
0.10 ≤ x ≤0.25;
0 ≤ µ ≤ 0.01,
0 ≤ v ≤ 0.01,
0 < δ ≤ 0.01 und
0. 995 ≤z < 1 hat.

4. Kondensator gemäß Anspruch 1,
**dadurch gekennzeichnet,**
**daß** das dotierte Barium-Calcium-Zirkon-Titanat die Zusammensetzung (Ba_{0.96-µ}A_{µ}Ca_{0.04})[Ti_{1-x-δ.v'}Mn_{δ}D'_{v'}Zrₓ]_{z}O₃ mit
A = Ag,
D' = Nb, Mo,
0.10 s x ≤0.25;
0 ≤ µ ≤ 0.01,
0 ≤ v' ≤ 0.01,
0 < δ ≤ 0.01 und
0.995 ≤ z < 1 hat.

5. Kondensator gemäß Anspruch 1,
**dadurch gekennzeichnet,**
**daß** das dotierte Barium-Calcium-Zirkon-Titanat die Zusammensetzung
(Ba_{0.9575}Nd_{0.0025}Ca_{0.04})[Ti_{0.995-x}Mn_{0.0025}Y_{0.0025}Zrₓ]_{z}O₃ mit 0.18 ≤ x ≤ 0.22 und 0.995 ≤ z ≤ 0.999 hat.

6. Kondensator gemäß Anspruch 1,
**dadurch gekennzeichnet,**
**daß** das Material für die Elektroden (2) Nickel oder eine Nickellegierung ist.

7. Kondensator gemäß Anspruch 1,
**dadurch gekennzeichnet,**
**daß** er ein Vielschichtkondensator mit inneren Elektroden (2) aus Nickel oder einer Nickellegierung ist.

8. Kondensator gemäß Anspruch 1,
**dadurch gekennzeichnet,**
**daß** die dielektrische keramische Zubereitung 0,1 - 1 Gew.-% Sinterhilfsmittel enthält.

9. Keramik auf der Basis von dotiertem Barium-Calcium-Zirkon-Titanat **dadurch gekennzeichnet, daß** die Zusammensetzung des Barium-Calcium-Zirkon-Titanats (Ba_{1-α,µ,v}A_{µ}DᵥCa_{α})[Ti_{t-x-δ-µ'-v'}Mn_{δ}A'_{µ'}D'_{v'}Zrₓ]_{z}O₃ ist,
wobei A = Ag,
A' = Dy, Er, Ho, Y, Yb, Ga;
D = Nd, Pr, Sm, Gd;
D' = Nb, Mo,
0.10 ≤ x ≤ 0.25
0 ≤ µ ≤ 0.01,
0 ≤ µ'≤ 0.01,
0 ≤ v ≤ 0.01,
0 ≤ v' ≤ 0.01,
0 < δ ≤ 0.01,
0.995 ≤ z < 1 und
0 < α ≤ 0.05.

10. Keramik auf der Basis von dotiertem Barium-Calcium-Zirkon-Titanat gemäß Anspruch 9, **dadurch gekennzeichnet, daß** die Zusammensetzung 0.1-1 Gew.-% Sinterhilfsmittel umfaßt.

11. Keramik auf der Basis von dotiertem Barium-Calcium-Zirkon-Titanat gemäß Anspruch 10, **dadurch gekennzeichnet, daß** das Sinterhilfsmittel SiO₂ in einer Menge von 0.125 6ew.-% bis 0.25 6ew.-% SiO₂ enthält.

12. Keramik auf der Basis von dotiertem Barium-Calcium-Zirkon-Titanat gemäß Anspruch 10, **dadurch gekennzeichnet, daß** das Sinterhilfsmittel besteht aus einer Mischung von 0.16 bis 0.9 Mol Lithiumoxid, 0.004 bis 0.39 Mol eines oder mehrere der Oxide CaO, MgO, BaO und SrO sowie 0.2 bis 0.8 Mol Siliziumoxid.

## Claims

1. Capacitor having at least two electrodes (2) and having a ceramic dielectric (1) based on doped barium calcium zirconium titanate, **characterised in that** the composition of the barium calcium zirconium titanate is (Ba_{1-α-µ-v}A_{µ}DᵥCa_{α})[Ti_{1-x-δ-µ'-v'}Mn_{δ}A'_{µ'}D'_{v'}Zrₓ]_{z}O₃ wherein
A = Ag,
A' = Dy, Er, Ho, Y, Yb, Ga;
D = Nd, Pr, Sm, Gd;
D' = Nb, Mo,
0.10 ≤ x ≤ 0.25,
0 ≤ µ ≤ 0.01,
0≤ µ' ≤ 0.01,
0 ≤ v ≤ 0.01,
0 ≤ v' ≤ 0.01,
0 < δ ≤ 0.01,
0.995 ≤ z < 1 and
0 < α ≤ 0.05.

2. Capacitor according to claim 1,
**characterised in that**
the doped barium calcium zirconium titanate has the composition (Ba_{0.96-v}DᵥCa_{0.04})[Ti_{1-x-δ-µ'}Mn_{δ}A'_{µ'}Zrₓ]_{z}O₃ wherein
A' = Dy, Er, Ho, Y, Yb;
D = Nd, Pr, Sm, Gd;
0.10 ≤ x ≤ 0.25;
0 ≤ µ' ≤ 0.01,
0 ≤ v ≤ 0.01,
0 < δ ≤ 0.01 and
0.995 ≤ z < 1.

3. Capacitor according to claim 1,
**characterised in that**
the doped barium calcium zirconium titanate has the composition (Ba_{0.96-µ-v}A_{µ}DᵥCa_{0.04})(Ti_{1-x-δ}Mn_{δ}Zrₓ]_{z}O₃ wherein
A = Ag,
D = Nd, Pr, Sm, Gd;
0.10 ≤ x ≤ 0.25;
0 ≤ µ ≤ 0.01,
0 ≤ v ≤ 0.01,
0 < δ ≤ 0.01 and
0.995 ≤ z < 1.

4. Capacitor according to claim 1,
**characterised in that**
the doped barium calcium zirconium titanate has the composition (Ba_{0.96-µ}A_{µ}Ca_{0.04})[Ti_{l-x-δ-v'}Mn_{δ}D'_{v'}Zrₓ]_{z}O₃ wherein
A=Ag,
D' = Nb, Mo,
0.10 ≤ x ≤ 0.25;
0 ≤ µ ≤ 0.01,
0 ≤ v' ≤ 0.01,
0 < δ ≤ 0.01 and
0.995 ≤ z < 1.

5. Capacitor according to claim 1,
**characterised in that**
the doped barium calcium zirconium titanate has the composition (Ba_{0.9575}Nd_{0.0025}Ca_{0.04})[Ti_{0.995-x}Mn_{0.0025}Y_{0.0025}Zrₓ]_{z}O₃ wherein 0.18 ≤ x ≤ 0.22 and 0.995 ≤ z ≤ 0.999.

6. Capacitor according to claim 1,
**characterised in that**
the material for the electrodes (2) is nickel or a nickel alloy.

7. Capacitor according to claim 1,
**characterised in that**
it is a multilayer capacitor having internal electrodes (2) of nickel or a nickel alloy.

8. Capacitor according to claim 1,
**characterised in that**
the dielectric ceramic preparation contains from 0.1 to 1 % by weight sintering auxiliary.

9. Ceramic based on doped barium calcium zirconium titanate, **characterised in that** the composition of the barium calcium zirconium titanate is (Ba_{1-α-µ-v}A_{µ}DᵥCa_{α})[Ti_{1-x-δ-µ'-v'}Mn_{δ}A'_{µ'}D'_{v'}Zrₓ]_{z}O₃ wherein
A = Ag,
A' = Dy, Er, Ho, Y, Yb, Ga;
D = Nd, Pr, Sm, Gd;
D' = Nb, Mo,
0.10 ≤ x ≤ 0.25,
0 ≤ µ ≤ 0.01,
0 ≤ µ' ≤ 0.01,
0 ≤ v ≤ 0.01,
0 ≤ v' ≤ 0.01,
0 < δ ≤ 0.01,
0.995 ≤ z < 1 and
0 < α ≤ 0.05.

10. Ceramic based on doped barium calcium zirconium titanate according to claim 9, **characterised in that** the composition comprises from 0.1 to 1 % by weight sintering auxiliary.

11. Ceramic based on doped barium calcium zirconium titanate according to claim 10, **characterised in that** the sintering auxiliary contains SiO₂ in an amount of from 0.125 % by weight to 0.25 % by weight SiO₂.

12. Ceramic based on doped barium calcium zirconium titanate according to claim 10, **characterised in that** the sintering auxiliary consists of a mixture of from 0.16 to 0.9 mol of lithium oxide, from 0.004 to 0.39 mol of one or more of the oxides CaO, MgO, BaO and SrO as well as from 0.2 to 0.8 mol of silicon oxide.

## Revendications

1. Condensateur avec au moins deux électrodes (2) et avec un diélectrique céramique (1) à base de titanate de baryum-calcium-zirconium dopé, **caractérisé en ce que** la composition du titanate de baryum-calcium zirconium est (Ba_{1-α-µ-ν}A_{µ}D_{ν}Ca_{α}) [Ti_{1-X-δ-µ'-ν'}Mn_{δ}A'_{µ'}D'_{ν'}Zr_{X}]_{Z}O₃ sachant que A = Ag,
A' = Dy, Er, Ho, Y, Yb, Ga ;
D = Nd, Pr, Sm, Gd;
D' = Nb, Mo,
0,10 ≤ χ ≤ 0,25
0 ≤ µ ≤ 0,01
0 ≤ µ' ≤ 0,01
0 ≤ ν ≤ 0,01
0 ≤ ν' ≤ 0,01
0 < δ ≤ 0,01
0,995 ≤ z < 1 et
0 < α ≤ 0,05.

2. Condensateur selon la revendication 1, **caractérisé en ce que** le titanate de baryum-calcium-zirconium dopé a la composition (Ba_{0.96-ν}D_{ν}Ca_{0.04}) [Ti_{1-X-δ-µ'}MnδA'_{µ'}Zr_{X}]_{Z}O₃ avec
A' = Dy, Er, Ho, Y, Yb ;
D = Nd, Pr, Sm, Gd;
0,10 ≤ χ ≤ 0,25 ;
0 ≤ µ' ≤ 0,01,
0 ≤ ν ≤ 0,01
0 < δ ≤ 0,01 et
0,995 ≤ z < 1.

3. Condensateur selon la revendication 1, **caractérisé en ce que** le titanate de baryum-calcium-zirconium dopé a la composition (Ba_{0.96-µ-ν}A_{µ}D_{ν}Ca_{0.04}) [Ti_{1-X-δ}Mn_{δ}Zr_{X}]_{Z}O₃ avec
A = Ag ;
D = Nd, Pr, Sm, Gd;
0,10 ≤ χ ≤ 0,25 ;
0 ≤ µ ≤ 0,01
0 ≤ ν ≤ 0,01
0 < δ ≤ 0,01 et
0,995 ≤ z < 1.

4. Condensateur selon la revendication 1, **caractérisé en ce que** le titanate de baryum-calcium-zirconium dopé a la composition (Ba_{0.96-µ}A_{µ}Ca_{0.04}) [Ti_{1-x-δ-ν'}Mn_{δ}D'_{ν'}Zr_{X}]_{Z}O₃ avec
A = Ag,
D' = Nb, Mo,
0,10 ≤ χ ≤ 0,25
0 ≤ µ ≤ 0,01
0 ≤ ν' ≤ 0,01
0 < δ ≤ 0,01 et
0,995 ≤ z < 1.

5. Condensateur selon la revendication 1, **caractérisé en ce que** le titanate de baryum-calcium-zirconium dopé a la composition (Ba_{0.9575}Nd_{0.0025}Ca_{0.04})[Ti_{0.995-x}Mn_{0.0025}Y_{0.0025}Zrₓ]_{z}O₃ avec 0,18 ≤ χ ≤ 0,22 et 0,995 ≤ z ≤ 0,999.

6. Condensateur selon la revendication 1, **caractérisé en ce que** le matériau pour les électrodes (2) est du nickel ou un alliage de nickel.

7. Condensateur selon la revendication 1, **caractérisé en ce** le condensateur est un condensateur multicouches avec électrodes (2) internes en nickel ou en alliage de nickel.

8. Condensateur selon la revendication 1, **caractérisé en ce que** la préparation céramique diélectrique contient 0,1 à 1% en poids d'adjuvant de frittage.

9. Céramique à base de titanate de baryum-calcium-zirconium dopé, **caractérisée en ce que** la composition du titanate de baryum-calcium-zirconium est (Ba_{1-α-µ-ν}A_{µ}D_{ν}Ca_{α}) [Ti_{1-X-δ-µ'-ν'}Mn_{δ}A'_{µ'}D'_{ν'}Zrₓ]_{Z}O₃
sachant que A = Ag,
A' = Dy, Er, Ho, Y, Yb, Ga ;
D = Nd, Pr, Sm, Gd;
D' = Nb, Mo,
0,10 ≤ χ ≤ 0,25
0 ≤ µ ≤ 0,01
0 ≤ µ' ≤ 0,01
0 ≤ ν ≤ 0,01
0 ≤ ν' ≤ 0,01
0 < δ ≤ 0,01
0,995 ≤ z < 1 et
0 < α ≤ 0,05.

10. Céramique à base de titanate de baryum-calcium-zirconium dopé selon la revendication 9, **caractérisée en ce que** la composition comprend 0,1 à 1% en poids d'adjuvant de frittage.

11. Céramique à base de titanate de baryum-calcium-zirconium dopé selon la revendication 10, **caractérisée en ce que** l'adjuvant de frittage contient du SiO₂ dans une quantité allant de 0,125 à 0,25% en poids de SiO₂.

12. Céramique à base de titanate de baryum-calcium-zirconium dopé selon la revendication 10, **caractérisée en ce** l'adjuvant de frittage est constitué d'un mélange de 0,16 à 0,9 mol d'oxyde de lithium, 0,004 à 0,39 mol d'un ou plusieurs des oxydes CaO, MgO, BaO et SrO ainsi que 0,2 à 0,8 mol d'oxyde de silicium.
